# EUROPEAN PATENT SPECIFICATION

(11) **EP 1 709 339 B1**
(45) Date of publication and mention of the grant of the patent: **29.04.2020**
(21) Application number: 05711949.7
(22) Date of filing: 20.01.2005
(51) Int. Cl.: A61C 1/18, F16D 3/36

(54) **ADJUSTABLE BEARING ASSEMBLY FOR ROTATING SPINDLE OF A DENTAL HANPIECE**
EINSTELLBARE LAGERANORDNUNG FÜR ROTIERENDE SPINDEL EINES ZAHNÄRZLICHEN INSTRUMENTS
MONTAGE A ROULEMENT AJUSTABLE POUR AXE TOURNANT D'INSTRUMENT DENTAIRE

(30) Priority: 20.01.2004 US 538023 P
(43) Date of publication of application: 11.10.2006
(73) Proprietor: DENTSPLY SIRONA Inc., York, PA 17401-2991 (US)
(72) Inventor: BROOKE, Clay, Plymouth PL3 4NL (GB)
(74) Representative: Hartz, Nikolai
(86) International application number: PCT/US2005/002250
(87) International publication number: WO 2005/073577

(56) References cited:
- GB-A- 2 044 879
- US-A- 1 022 909
- US-B1- 6 306 045
- US-B1- 6 425 761

## Description

### TECHNICAL FIELD

The present invention is generally directed toward a dental handpiece using a rotating spindle. More particularly, the invention is directed toward a dental handpiece using a rotating spindle that is rotated by an adjustable bearing assembly that connects the spindle to a drive motor as defined by the claim.

### BACKGROUND OF THE INVENTION

Rotating spindles used in dental handpieces, are often attached to a drive motor. There is often a connection between the drive motor and the spindle, and this extension is often a part of the drive motor axle. The length of that connection is critical for the placement of the spindle itself. Great care is required when fabricating the arrangement so that the placement of the spindle is precise as is especially required with small components such as those of an electric motor, dental handpiece. Much time and effort is often expended in making and aligning the various components. An example of an electric motor dental handpiece is shown in U.S. Pat. No. 6,425,761.

Further, during use the distance between the drive motor and the rotating spindle will vary, as will the position of the components in a direction perpendicular to their axes of rotation. Often the axis of rotation of the drive motor will lie in a different plane than that of the rotating spindle. Sometimes they will lie in the same plane and more often they will vary.

A need exists therefore for a bearing or combination of bearings that makes the connection between the drive motor and the spindle in a manner that is adjustable. In such a way, the alignment of the spindle can be made substantially regardless of the length or manufacturing tolerances of the component parts and substantially regardless of the position of the drive motor relative to the rotating spindle.

### SUMMARY OF THE INVENTION

The present invention provides a dental handpiece according to the claim. An adjustable bearing assembly for a rotating spindle according to the invention has a working end and an oppositely positioned drive end. The assembly comprises a ball connector affixed to the drive end of the spindle, a linear bearing adjustably affixed to the spindle, and a spherical bearing assembly wherein said spherical bearing assembly is affixed to said ball connector at one end and affixed to a drive motor at an opposite end thereof. The linear bearing can be used to adjust and affix the position of the spindle in a direction substantially parallel to the linear axis of the spindle. The drive motor has an axis of rotation and a drive bar eccentrically offset from the axis of rotation. The drive bar has a drive bar ball at an end opposite the and the spherical bearing assembly has a first ball receiving sphere configured to receive the drive bar ball. A second ball receiving sphere is adapted to receive the ball connector of the spindle, and a connecting rod is positioned between and connects the first and the second ball receiving spheres in a spaced opposing relation.

### BRIEF DESCRIPTION OF THE DRAWINGS

Figure 1 is a side plan view of an adjustable bearing assembly for a rotating spindle shown for environmental purposes in conjunction with a drive motor.

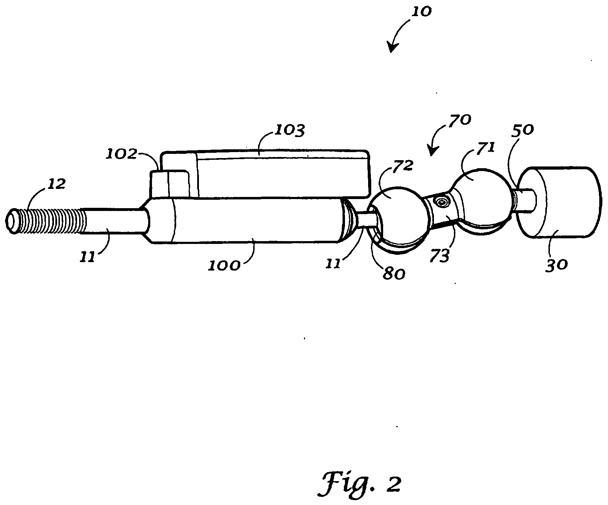

Figure 2 is a perspective view of one portion of the assembly and drive motor of Figure 1.
Figure 3 is an alternative embodiment of an adjustable bearing assembly.
Figure 4 is another alternative embodiment of an adjustable bearing assembly.
Figure 5 is a plan view of an adjustable bearing assembly of the invention.

### PREFERRED EMBODIMENT FOR CARRYING OUT THE INVENTION

A bearing assembly for a rotating spindle, according to the present invention, is generally designated by the number 10 on the attached drawings. The present invention relates to dental handpieces, such as for use with dental burs, reamers and polishers (not shown) wherein it is desired to connect a rotating spindle or other tool to a drive motor. For purposes of describing the present invention, reference may be made to the dental handpiece application. As such, such a conventional rotating dental tool (not shown) can be affixed to a rotating spindle 11 by any conventional means such as by threads 12. It is also conventional to employ an angled headpiece, such as is shown in U.S. Pat. No. 6,425,761, and as such, spindle 11 may be operatively connected to such an angle piece.

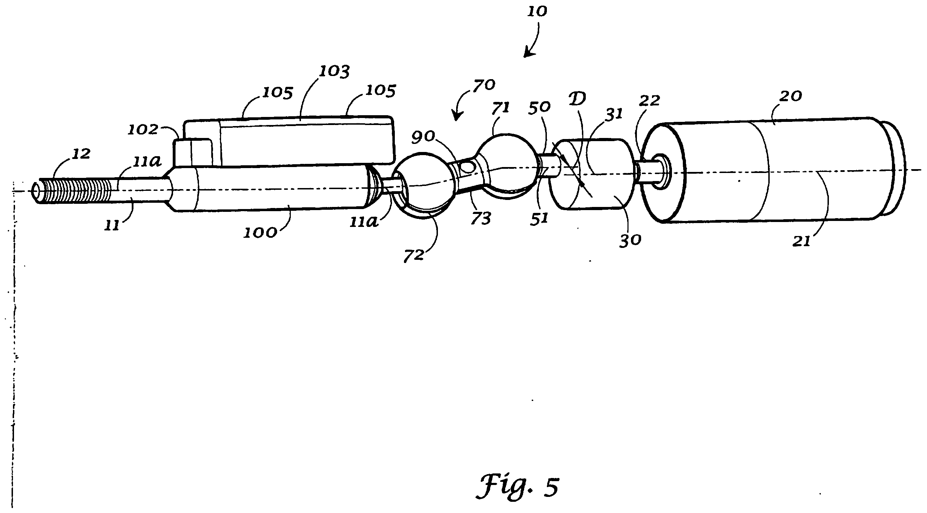

A drive motor 20 is provided having a central axis 21 (shown in phantom on the drawings) of an axle 22 (Figure 5). Drive motor 20 may be of any conventional design such as being an air driven vane motor, but is preferably an electric motor. Drive motor 20 rotates axle 22 in a desired direction.

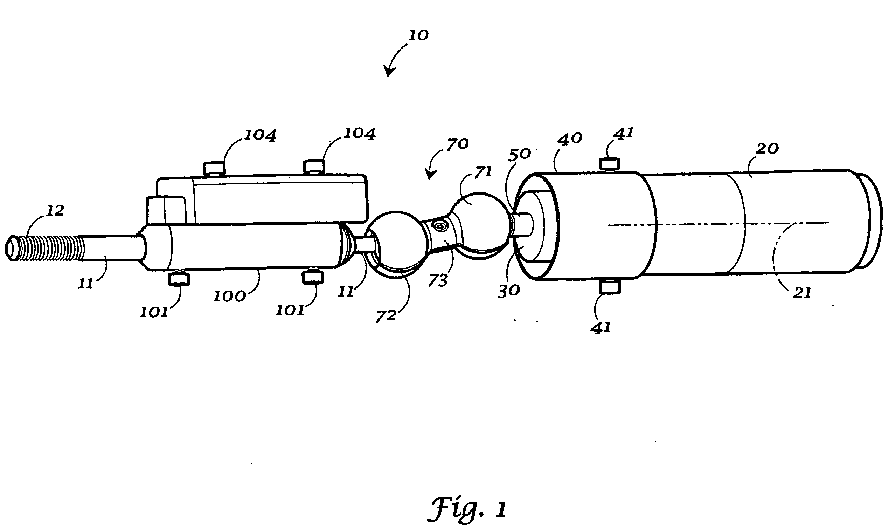

As best shown in Figure 5, there is affixed to axle 22 an armature 30 which has a center axis 31 preferably coincident with center axis 21 of drive motor 20. By being affixed to axle 22, armature 30 is caused to rotate about its axis 31 as drive motor rotates its axle 22 about its axis 21. As shown in Figure 1, armature 30 may be housed in a race 40 having securing bolts 41 for affixing to a suitable support such as a dental handpiece housing (not shown). At an end generally opposite that of its connection to axle 22, armature 30 is provided with a protruding and offset drive bar 50. By "offset" it is meant that as armature 30 rotates, offset drive bar 50 follows a generally circular path around center axis 31 of armature 30. It is envisioned that non-circular paths are also be within the scope of the invention, but circular paths will be discussed here for simplicity. Offset drive bar 50 may be cylindrical as shown in the drawings or may be any other shape. If cylindrical it would have a center axis 51 that is offset some distance D (Figure 5) from center axis 31 of armature 30.

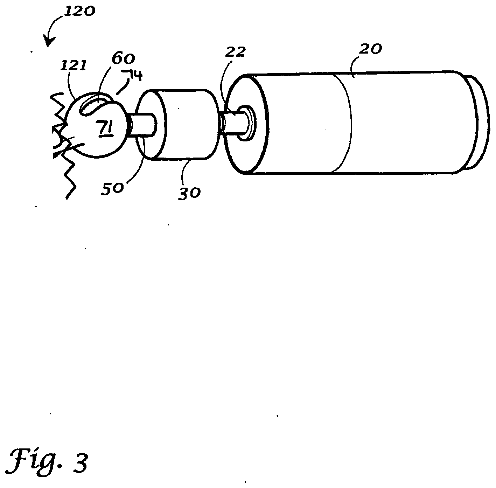

Figure 3 shows a reference embodiment that will be more fully discussed hereinbelow. However, Figure 3 clearly shows a connecting ball 60 affixed to offset drive bar 50 that is useful with several embodiments of the invention as discussed herein. Positioned between spindle 11 and drive motor 20 is a spherical bearing assembly generally designated by the number 70. According to the present invention, spherical bearing assembly 70 has a first ball receiving sphere 71 and a second ball receiving sphere 72 which are positioned in a spaced opposing relation by a connecting portion 73. First ball receiving sphere 71 is configured to be hollow or semi-hollow so as to be dimensioned to receive connecting ball 60. First ball receiving sphere 71 may be configured with a slit 74 to facilitate placing ball 60 therein. Ball receiving sphere 71 and 72 may be fabricated from any suitable organic or inorganic material such as metal, rubber, plastic, carbon or the like. When ball 60 is received within first ball receiving sphere 71, it is physically held therein, such as by a friction fit or by device, such that drive bar 50 is caused to rotate in a circular path about axis 31 of armature 30, ball 60 and the physically contacted first ball receiving sphere 71 is are likewise caused to rotate about the same axis 31 in a circular manner or other manner as may be associated with offset drive bar 50. Similarly, spindle 11 is provided with a spindle ball 80 that can be received in second ball receiving sphere 72 of spherical bearing assembly 70 in a like manner to that of ball 60 and first ball receiving sphere 71.

Connector 73 has a center axis or generally center line 90 that in normal use is offset at some angle from axis 21 of motor 20. It will thus be appreciated that as ball 60 is caused to move in a circular path about axis 21 of motor 20, spindle ball 80 will be caused to rotate about a center axis 11a of spindle 11. Because spindle ball 80 is affixed to spindle 11, spindle 11 is also caused to rotate about its axis 11a.

Spindle 11 is supported by a spindle race 100. Spindle race 100 is affixed to a dental handpiece housing (not shown) by bolts 101. Spindle 11 is adjustable in a direction parallel to the linear dimension of its axis of rotation 11a. A linear bearing 102 is affixed to race 100 and received within a linear bearing race 103. By sliding linear bearing 102 within linear bearing race 103, the placement of spindle 11 can be adjusted without changing the physical dimension of spindle 11. To affix spindle 11 in the selected position, bolts 104 are provided through holes 105 in linear bearing race 103 such that bolts 104 physically contact linear bearing 102. It will also be appreciated that when moving spindle 11 to the desired position parallel to the linear dimension of its axis of rotation 11a, the angle between axis 90 and axis 21 is also changed. Again, this adjustment can be finely made substantially without regard to the physical or length dimensions of the other components. Thus a bearing assembly 10 is provided to adjust the position of the spindle 11.

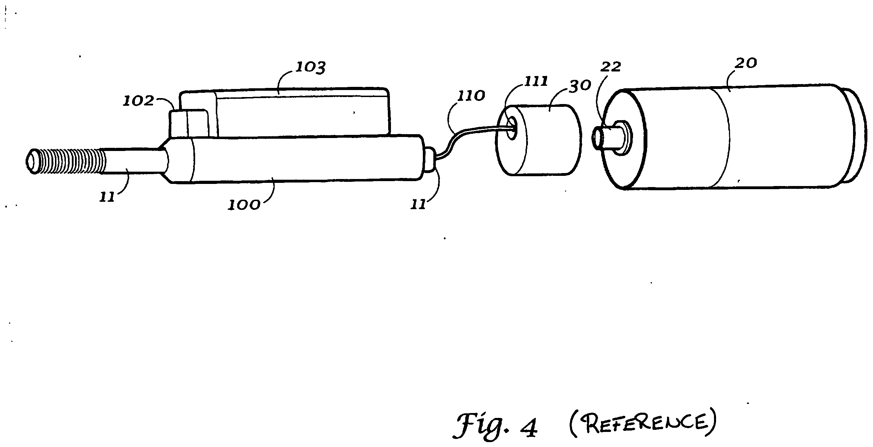

A ref erence embodiment is shown for illustrative purposes in Figure 4. Rather than having a spherical bearing assembly 70 between motor 20 and spindle 11, there is a flexible drive cable 110. By being flexible and longer in length than required to bridge the span between armature 30 and spindle 11, there is enough slack in drive cable 110 make up for or allow for any increase or decrease in such distance based upon the physical size of the various components. Flexible drive cable 110 may be mounted by any means such as a conventional ring bearing 111 which is offset in armature 30 in a manner substantially similar to that of drive bar 50 as above described.

Figure 3 shows another ref erence embodiment wherein a spherical bearing 120 includes a single ball receiving sphere 121 attached to spindle 11 by a jointed connector 122. The physical span between motor 20 and spindle 11 is made and the position of the motor 20 relative to spindle 11, both in a direction parallel to or perpendicular to the spindle 11 axis of rotation 11a is also compensated for. Because these dimensions will vary both during production and during use of the device, the variance is compensated for.

## Claims

1. A dental handpiece comprising
(a) an adjustable bearing assembly (10);
(b) a drive motor (20); and
(c) a rotating spindle (11) having a working end and an oppositely positioned drive end;
**characterized in that** the adjustable bearing assembly (10) comprises:
(i) a ball connector (80) affixed to the drive end of the spindle (11),
(ii) a linear bearing (102) adjustably affixed to the spindle (11) so that the position of the spindle is adjustable and affixable in a direction parallel to the linear axis of the spindle (11a) by using bolts (104) provided through holes (105) in a linear bearing race (103) such that the bolts (104) physically contact the linear bearing (102) and
(iii) a spherical bearing assembly (70) wherein said spherical bearing assembly (70) is affixed to said ball connector (80) at one end and affixed to the drive motor (20) at an opposite end thereof;
said drive motor (20) having an axis of rotation (21) and a drive bar (50) eccentrically offset (D) from said axis of rotation (21); said drive bar (50) having a drive bar ball (60) at an end opposite said drive motor (20);
said spherical bearing assembly (70) having a first ball receiving sphere (71) configured to receive said drive bar ball (60), and a second ball receiving sphere (72) adapted to receive said ball connector affixed to the drive end of the spindle (11), and a connecting rod (73) positioned between and connecting said first and said second ball receiving spheres (71, 72) in a spaced opposing relation.

## Patentansprüche

1. Dentalhandstück, umfassend
(a) eine verstellbare Lageranordnung (10);
(b) einen Antriebsmotor (20); und
(c) eine Drehspindel (11) mit einem Arbeitsende und einem gegenüberliegend angeordneten Antriebsende;
**dadurch gekennzeichnet, dass** die einstellbare Lageranordnung (10) umfasst
(i) ein Kugelverbindungsglied (80), das am Antriebsende der Spindel (11) befestigt ist,
(ii) ein Linearlager (102), das einstellbar an der Spindel (11) befestigt ist, sodass die Position der Spindel in einer Richtung parallel zur Linearachse der Spindel (11a) einstellbar und befestigbar ist, indem Bolzen (104) verwendet werden, die durch Löcher (105) in einem Linearlagerlaufring (103) vorgesehen sind, sodass die Bolzen (104) das Linearlager (102) physisch kontaktieren, und
(iii) eine Sphärolageranordnung (70), wobei die Sphärolageranordnung (70) an einem Ende an dem Kugelverbindungsglied (80) und an einem gegenüberliegenden Ende an dem Antriebsmotor (20) befestigt ist;
wobei der Antriebsmotor (20) eine Drehachse (21) und eine Antriebsstange (50) aufweist, die exzentrisch zur Drehachse (21) versetzt (D) ist; die Antriebsstange (50) an einem dem Antriebsmotor (20) gegenüberliegenden Ende eine Antriebsstangenkugel (60) aufweist; die Sphärolageranordnung (70) eine erste Kugelaufnahmesphäre (71), die konfiguriert ist, die Kugel (60) der Antriebsstange aufzunehmen, und eine zweite Kugelaufnahmesphäre (72), die angepasst ist, das an dem Antriebsende der Spindel (11) befestigte Kugelverbindungsglied aufzunehmen, und eine Verbindungsstange (73) aufweist, die zwischen der ersten und der zweiten Kugelaufnahmesphäre (71, 72) positioniert ist und diese in einer beabstandeten gegenüberliegenden Beziehung verbindet.

## Revendications

1. Pièce à main dentaire comprenant
(a) un ensemble de roulement réglable (10) ;
(b) un moteur d'entraînement (20) ; et
(c) une broche rotative (11) ayant une extrémité de travail et une extrémité d'entraînement positionnée dans le sens opposé ;
**caractérisée en ce que** l'ensemble de roulement réglable (10) comprend
(i) un connecteur à billes (80) fixé à l'extrémité d'entraînement de la broche (11),
(ii) un roulement linéaire (102) fixé de manière réglable à la broche (11) de sorte que la position de la broche est réglable et peut être fixée dans une direction parallèle à l'axe linéaire de la broche (11a) en utilisant des boulons (104) prévus à travers des trous (105) dans une bague de roulement linéaire (103) de sorte que les boulons (104) sont en contact physique avec le roulement linéaire (102) et
(iii) un ensemble de roulement sphérique (70),
dans lequel ledit ensemble de roulement sphérique (70) est fixé audit connecteur à bille (80) à une extrémité et apposé sur le moteur d'entraînement (20) à l'opposé de celui-ci ;
ledit moteur d'entraînement (20) ayant un axe de rotation (21) et une barre d'entraînement (50) décalée de façon excentrique(D) par rapport audit axe de rotation (21) ; ladite barre d'entraînement (50) ayant une bille de barre d'entraînement (60) à une extrémité opposée audit moteur d'entraînement (20) ; ledit ensemble de roulement sphérique (70) ayant une première sphère de réception de bille (71) configurée pour recevoir ladite bille de barre d'entraînement (60), et une deuxième sphère de réception de bille (72) adaptée pour recevoir ledit connecteur à bille fixé à l'extrémité d'entraînement de la broche (11), et une tige de connexion (73) positionnée entre et connectant lesdites première et deuxième sphères de réception de bille (71, 72) dans une relation opposée espacée.
